# EUROPEAN PATENT SPECIFICATION

(11) **EP 4 034 842 B1**
(45) Date of publication and mention of the grant of the patent: **22.01.2025**
(21) Application number: 19782491.5
(22) Date of filing: 24.09.2019
(51) Int. Cl.: G01D 5/14, G01D 3/036

(54) **DISPLACEMENT MEASURING ARRANGEMENT WITH A HALL SENSOR AND A MAGNET**
VERDRÄNGUNGSMESSANORDNUNG MIT EINEM HALL-SENSOR UND EINEM MAGNETEN
AGENCEMENT DE MESURE DE DÉPLACEMENT DOTÉ D'UN CAPTEUR À EFFET HALL ET D'UN AIMANT

(43) Date of publication of application: 03.08.2022
(73) Proprietor: HELLA GmbH & Co. KGaA, 59552 Lippstadt (DE)
(72) Inventor: IONESCU, Andrei Serban, Timisoara (RO); LANGE, Andreas, 59555 Lippstadt (DE); NYIREDI, Bogdan, Timisoara (RO)
(86) International application number: PCT/EP2019/075669
(87) International publication number: WO 2021/058086

(56) References cited:
- EP-A1- 3 524 989
- WO-A1-2019/086367
- DE-A1- 10 334 204
- US-A1- 2015 316 394

## Description

The invention is about a displacement measuring arrangement with a first Hall sensor and a magnet, wherein the first Hall sensor has a first measurement direction in which a component of a magnetic flux density can be measured with the first Hall sensor, and wherein the first Hall sensor and the magnet are arranged such that relative movement is possible between the first Hall sensor and the magnet, in which the magnetic flux density of the magnet in the first Hall sensor is at least substantially in the direction of the first measurement direction. The invention also concerns a linear motion actuator.

From the document DE 10 2006 006 241 A1 a linear motion actuator is known, which has a drive with which a so-called actuating member can be moved linearly. To monitor the distance travelled by the actuating member and, in particular, to set a position exactly, a displacement measuring arrangement is provided which records the change in the distance between the actuating member and a basic position. From DE 10 334 204 A1 a magnetic displacement measuring arrangement having first and second Hall sensors is known. The second Hall sensor is placed outside of a magnetic field of the arrangement measured by the first sensor to eliminate the influence of an external magnetic field.

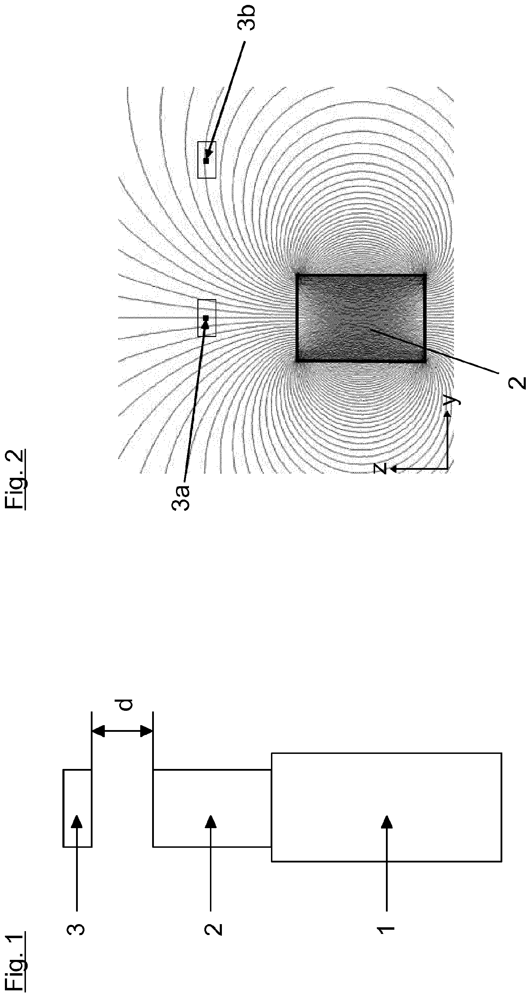

- fig. 1: schematically illustrates the state of the art displacement measuring arrangement.

The displacement measuring arrangement has a Hall sensor 3 and a magnet 2. Magnet 2 is attached to actuating member 1. The Hall sensor 3 is attached to a part of the displacement measuring arrangement opposite which the actuating member 1 is moved.

A movement d of magnet 2 relative to Hall sensor 3 changes the magnetic field produced by magnet 2 at the location of Hall sensor 3 as a function of the distance between magnet 2 and Hall sensor 3. This changes the Hall voltage in Hall sensor 3. The Hall voltage as such can be made available by Hall sensor 3 at an output. Alternatively, the Hall voltage 3 in the Hall sensor 3 can first be processed, for example amplified, in order to be made available at an output.

A problem with Hall sensors used for displacement measurement is that the magnetic field generated by the magnet and detected by the Hall sensor can be superimposed by other magnetic fields. These other magnetic fields interfere with the displacement measurement because the Hall sensor detects the resulting magnetic field from all magnetic fields. The signal at the output of the Hall sensor therefore does not indicate the distance or position to be measured.

The invention was therefore based on the problem of compensating magnetic field interferences during displacement measurement or position detection with an arrangement using a Hall sensor of the type mentioned at the beginning.

This problem is solved according to the invention,
- in that the displacement measuring arrangement has a second Hall sensor,
- the second Hall sensor having a second measurement direction in which a component of a magnetic flux density is measurable with the second Hall sensor,
- wherein the first Hall sensor and the second Hall sensor are arranged such that the first measurement direction and the second measurement direction are at least substantially parallel,
- wherein the second Hall sensor and the magnet are arranged such that the magnetic flux density of the magnet in the second Hall sensor is at least substantially perpendicular to the second measurement direction.

The invention is based on the idea of using the second Hall sensor to detect as exclusively as possible the magnetic fields that interfere with displacement measurement or position detection, while the magnetic field generated by the magnet of the displacement measuring arrangement is not detected by the second Hall sensor. Then the signal of the first Hall sensor can be corrected with the help of the signal of the second Hall sensor so that there is a signal indicating the displacement or position.

For this to be possible, the first and second Hall sensors must be as close together as possible so that the field strengths of the interference fields detected by the first Hall sensor are as equal as possible to the field strengths detected by the second Hall sensor. In addition, the Hall sensors must measure the same components of the interference fields. This means that the first measurement direction and the second measurement direction must be parallel or the same. At the same time, however, the field generated by the magnet of the displacement measuring arrangement must not be detected by the second Hall sensor. The second Hall sensor must be arranged at a location where the field generated by the magnet has no component in the second measurement direction, i.e. the direction in which the Hall sensor is aligned. This is the case where the field lines of the magnetic field generated by the magnet are perpendicular to the second measurement direction.

The same detection of interference fields by the first Hall sensor and the second Hall sensor is possible if the interference fields in the area of the two Hall sensors are homogeneous or approximately homogeneous. On the other hand, it is advantageous if the magnetic field caused by the magnet of the displacement measuring arrangement between the first Hall sensor and the second Hall sensor changes its direction by 90°, so that this magnetic field is invisible to the second Hall sensor and the second Hall sensor only detects the interference fields in the same way as the first Hall sensor. The second Hall sensor can then be used to compensate for the error caused by the interference fields in the first Hall sensor.

The path measuring arrangement has an evaluation means which is connected to a signal output of the first Hall sensor and the second Hall sensor. The evaluation means is suitable and arranged to provide a compensated sensor signal at an output of the displacement measurement arrangement by subtracting a sensor signal of the second Hall sensor from a sensor signal of the first Hall sensor.

A linear motion actuator according to the invention comprising a drive and an actuator driven by the drive may include a displacement measurement arrangement according to the invention by which a displacement travelled by the actuator and/or a position of the actuator can be determined. In such a linear motion actuator, the magnet may be attached to the actuating member. The first Hall sensor and the second Hall sensor may be mounted on a holder with respect to which the actuating element can be moved by the drive. The holder can be a housing, for example a housing of the drive.

The invention is explained in more detail below on the basis of the attached drawing.

### fig. 2

In the illustration of the magnetic field of magnet 2, 3a is the first Hall sensor. This first Hall sensor 3a is arranged at a location through which a field line of the magnetic field generated by magnet 2 runs in a z direction of a coordinate system shown in Fig. 2. Magnet 2 can be displaced in the z-direction.

A second Hall sensor is designated 3b. This second Hall sensor 3b is arranged in a position through which a field line of the magnetic field generated by magnet 2 runs in a y-direction of the coordinate system which is perpendicular to the z-direction.

Both Hall sensors 3a, 3b are aligned so that they can detect components of a magnetic field running in the z-direction. This means that the first Hall sensor 3a detects the magnetic field caused by magnet 2, while the second Hall sensor 3b cannot detect the magnetic field caused by magnet 2.

Magnetic interference fields that are homogeneous or almost homogeneous in the area of the two Hall sensors 3a, 3b are detected by both Hall sensors 3a, 3b to the same extent.

The first Hall sensor 3a thus detects both the magnetic field of magnet 2 and the interference fields. The second Hall sensor 3b, on the other hand, only detects the interference fields. The error caused by the interference fields can be compensated by a simple arithmetic operation in an evaluation means of a displacement measuring arrangement according to the invention, so that ideally a signal indicating the magnetic field of magnet 2 is present at the output of the displacement measuring arrangement.

### Reference sign list

- 1: Actuating member
- 2: Magnet
- 3: Hall sensor
- 3a: First Hall sensor
- 3b: Second Hall sensor

## Claims

1. Displacement measuring arrangement having a first Hall sensor (3a) and a magnet (2),
said first Hall sensor (3a) having a first measurement direction (z) in which a component of a magnetic flux density is measurable with said first Hall sensor (3a),
wherein the first Hall sensor (3a) and the magnet (2) are arranged to allow relative movement between the first Hall sensor (3a) and the magnet (2), wherein the magnetic flux density of the magnet (2) in the first Hall sensor (3a) is at least substantially in the direction of the first measurement direction (z),
wherein the displacement measuring device has a second Hall sensor (3b), the second Hall sensor (3b) having a second measurement direction (z) in which a component of a magnetic flux density can be measured with the second Hall sensor (3b),
wherein the first Hall sensor (3a) and the second Hall sensor (3b) are arranged such that the first measurement direction (z) and the second measurement direction (z) are at least substantially parallel,
wherein the first and second Hall sensors are as close together as possible so that the field strengths of interference fields detected by the first Hall sensor are as equal as possible to the field strengths detected by the second Hall sensor,
wherein the Hall sensors must measure the same components of the interference fields,
wherein the displacement measuring arrangement has an evaluation means which is connected to a signal output of the first Hall sensor (3a) and the second Hall sensor (3b),
wherein the evaluation means is suitable and arranged to provide a compensated sensor signal at an output of the displacement measuring arrangement by subtracting a sensor signal of the second Hall sensor (3b) from a sensor signal of the first Hall sensor (3a),
**characterized in**
• **that** at the same time, however, the field generated by the magnet of the displacement measuring arrangement must not be detected by the second Hall sensor,
• **that** the second Hall sensor (3b) is arranged at a location where the field generated by the magnet (2) has no component in the second measurement direction (z) i.e. that the second Hall sensor (3b) and the magnet (2) are arranged such that the magnetic flux density of the magnet (2) in the second Hall sensor (3b) is at least substantially perpendicular to the second measurement direction
• the magnet can be displaced in a direction (z), which is parallel to the first and the second measurement direction.

2. Linear motion actuator having a drive, an actuating member (1) driven by the drive and a displacement measuring arrangement with which a distance travelled by the actuating member (1) and/or a position of the actuating member (1) can be determined,
**characterised in that**
the displacement measuring arrangement is designed in accordance with claim 1.

3. Linear motion actuator according to claim 2, **characterized in that** the magnet (2) is fixed to the actuating member (1).

4. Linear motion actuator according to claim 2 or 3, **characterized in that** the first Hall sensor (3a) and the second Hall sensor (3b) are attached to a holder with respect to which the actuator (1) can be moved by the drive.

5. Linear motion actuator according to claim 4, **characterized in that** the holder is a housing, for example a housing of the drive.

## Patentansprüche

1. Verstellungsmessanordnung, die einen ersten Hall-Sensor (3a) und einem Magneten (2) aufweist,
wobei der erste Hall-Sensor (3a) eine erste Messrichtung (z) aufweist, in der eine Komponente einer magnetischen Flussdichte mit dem ersten Hall-Sensor (3a) messbar ist,
wobei der erste Hall-Sensor (3a) und der Magnet (2) so angeordnet sind, dass sie eine relative Bewegung zwischen dem ersten Hall-Sensor (3a) und dem Magneten (2) erlauben, wobei die magnetische Flussdichte des Magneten (2) im ersten Hall-Sensor (3a) mindestens im Wesentlichen in der Richtung der ersten Messrichtung (z) ist,
wobei die Verdrängungsmessvorrichtung einen zweiten Hall-Sensor (3b) aufweist, wobei der zweite Hall-Sensor (3b) eine zweite Messrichtung (z) aufweist, in welcher eine Komponente einer magnetischen Flussdichte mit dem zweiten Hall-Sensor (3b) gemessen werden kann,
wobei der erste Hall-Sensor (3a) und der zweite Hall-Sensor (3b) so angeordnet sind, dass die erste Messrichtung (z) und die zweite Messrichtung (z) mindestens im Wesentlichen parallel sind,
wobei der erste und der zweite Hall-Sensor so dicht wie möglich zusammen sind, so dass die Feldstärken von Interferenzfeldern, detektiert durch den ersten Hall-Sensor, den durch den zweiten Hall-Sensor detektierten Feldstärken so gleich wie möglich sind,
wobei die Hall-Sensoren die gleichen Komponenten der Interferenzfelder messen müssen,
wobei die Verdrängungsmessanordnung ein Evaluierungsmittel aufweist, das mit einem Signalausgang des ersten Hall-Sensors (3a) und des zweiten Hall-Sensors (3b) verbunden ist,
wobei das Evaluierungsmittel dazu geeignet und angeordnet ist, an einem Ausgang der Verdrängungsmessanordnung durch Subtrahieren eines Sensorsignals des zweiten Hall-Sensors (3b) von einem Sensor-Signal des ersten Hall-Sensors (3a) ein kompensiertes Sensorsignal bereitzustellen,
**dadurch gekennzeichnet,**
• **dass** jedoch gleichzeitig das durch den Magneten der Verdrängungsmessanordnung erzeugte Feld nicht vom zweiten Hall-Sensor detektiert werden darf,
• **dass** der zweite Hall-Sensor (3b) an einer Stelle angeordnet ist, wo das von dem Magneten (2) erzeugte Feld keine Komponente in der zweiten Messrichtung (z) aufweist, d. h. dass der zweite Hall-Sensor (3b) und der Magnet (2) so angeordnet sind, dass die magnetische Flussdichte des Magneten (2) im zweiten Hall-Sensor (3b) mindestens im Wesentlichen senkrecht zur zweiten Messrichtung ist,
• **dass** der Magnet in einer Richtung (z), die parallel zur ersten und zur zweiten Messrichtung ist, versetzt werden kann.

2. Linearer Bewegungsaktuator, der einen Antrieb, ein durch den Antrieb angetriebenes Betätigungselement (1) und eine Verstellungsmessanordnung, mit der eine von dem Betätigungselement (1) zurückgelegte Entfernung und/oder eine Position des Betätigungselements (1) bestimmt werden können, aufweist,
**dadurch gekennzeichnet, dass**
die Verdrängungsmessanordnung gemäß Anspruch 1 gestaltet ist.

3. Linearer Bewegungsaktuator nach Anspruch 2, **dadurch gekennzeichnet, dass** der Magnet (2) an dem Betätigungselement (1) befestigt ist.

4. Linearer Bewegungsaktuator nach Anspruch 2 oder 3, **dadurch gekennzeichnet, dass** der erste Hall-Sensor (3a) und der zweite Hall-Sensor (3b) an einem Halter angebracht sind, in Bezug auf den der Aktuator (1) durch den Antrieb bewegt werden kann.

5. Linearer Bewegungsaktuator nach Anspruch 4, **dadurch gekennzeichnet, dass** der Halter ein Gehäuse ist, beispielsweise ein Gehäuse des Antriebs.

## Revendications

1. Agencement de mesure de déplacement doté d'un premier capteur à effet Hall (3a) et d'un aimant (2),
ledit premier capteur à effet Hall (3a) présentant une première direction de mesure (z) dans laquelle une composante d'une densité de flux magnétique est mesurable avec ledit premier capteur à effet Hall (3a),
le premier capteur à effet Hall (3a) et l'aimant (2) étant disposés de manière à permettre un mouvement relatif entre le premier capteur à effet Hall (3a) et l'aimant (2), la densité du flux magnétique de l'aimant (2) dans le premier capteur à effet Hall (3a) étant au moins sensiblement dans la direction de la première direction de mesure (z),
l'agencement de mesure de déplacement étant doté d'un deuxième capteur à effet Hall (3b), le deuxième capteur à effet Hall (3b) ayant une deuxième direction de mesure (z) dans laquelle une composante d'une densité de flux magnétique est mesurable avec le deuxième capteur à effet Hall (3b),
le premier capteur à effet Hall (3a) et le deuxième capteur à effet Hall (3b) étant disposés de telle sorte que la première direction de mesure (z) et la deuxième direction de mesure (z) sont au moins sensiblement parallèles,
le premier et le deuxième capteur à effet Hall étant aussi proches que possible l'un de l'autre de manière à ce que les intensités des champs d'interférence détectés par le premier capteur à effet Hall soient aussi proches que possible des intensités des champs détectés par le deuxième capteur à effet Hall,
les capteurs à effet Hall devant mesurer les mêmes composantes des champs d'interférence,
l'agencement de mesure de déplacement étant doté d'un dispositif d'évaluation connecté à une sortie de signal du premier capteur à effet Hall (3a) et du deuxième capteur à effet Hall (3b),
le dispositif d'évaluation étant approprié et disposé de manière à fournir un signal de capteur compensé à une sortie de l'agencement de mesure de déplacement en soustrayant un signal de capteur du deuxième capteur à effet Hall (3b) d'un signal de capteur du premier capteur à effet Hall (3a),
**caractérisé en ce que**
• parallèlement, le champ généré par l'aimant de l'agencement de mesure de déplacement ne doit pas être détecté par le deuxième capteur à effet Hall,
• le deuxième capteur à effet Hall (3b) est placé à un endroit où le champ généré par l'aimant (2) n'a pas de composante dans la deuxième direction de mesure (z), c'est-à-dire que le deuxième capteur à effet Hall (3b) et l'aimant (2) sont disposés de telle sorte que la densité du flux magnétique de l'aimant (2) dans le deuxième capteur à effet Hall (3b) est au moins sensiblement perpendiculaire à la deuxième direction de mesure
• l'aimant peut être déplacé dans une direction (z) parallèle à la première et à la deuxième direction de mesure.

2. Actionneur à mouvement linéaire comportant un entraînement, un élément d'actionnement (1) entraîné par l'entraînement et un agencement de mesure de déplacement permettant de déterminer une distance parcourue par l'élément d'actionnement (1) et/ou une position de l'élément d'actionnement (1),
**caractérisé en ce que**
l'agencement de mesure de déplacement est conçu conformément à la revendication 1.

3. Actionneur à mouvement linéaire selon la revendication 2, **caractérisé en ce que** l'aimant (2) est fixé à l'élément d'actionnement (1).

4. Actionneur à mouvement linéaire selon la revendication 2 ou 3, **caractérisé en ce que** le premier capteur à effet Hall (3a) et le second capteur à effet Hall (3b) sont fixés sur un support par rapport auquel l'actionneur (1) peut être déplacé par l'entraînement.

5. Actionneur à mouvement linéaire selon la revendication 4, **caractérisé en ce que** le support est un boîtier, par exemple un boîtier de l'entraînement.
